# EUROPÄISCHE PATENTSCHRIFT

(11) **EP 3 365 565 B1**
(45) Veröffentlichungstag und Bekanntmachung des Hinweises auf die Patenterteilung: **05.06.2019**
(21) Anmeldenummer: 16782261.8
(22) Anmeldetag: 19.10.2016
(51) Int. Cl.: F16B 13/08, F16B 13/14

(54) **VERFAHREN ZUM FESTLEGEN EINES SPREIZANKERS AN EINEM SUBSTRAT, BEI DEM EINE AUSHÄRTBARE MASSE IN DEN RINGRAUM UM DEN SPREIZANKER EINGEBRACHT WIRD**
METHOD FOR FIXING A SPREADING ANCHOR TO A SUBSTRATE, IN WHICH A CURABLE COMPOSITION IS INSERTED INTO THE ANNULUS AROUND THE EXPANSION ANCHOR
PROCEDE D'APPLICATION D'UNE CHEVILLE EXTENSIBLE SUR UN SUBSTRAT, UNE MASSE DURCISSABLE ETANT INSEREE DANS L'ESPACE ANNULAIRE AUTOUR DE LA CHEVILLE EXTENSIBLE

(30) Priorität: 23.10.2015 EP 15191165
(43) Veröffentlichungstag der Anmeldung: 29.08.2018
(73) Patentinhaber: Hilti Aktiengesellschaft, 9494 Schaan (LI)
(72) Erfinder: MEINDORFER, Tanja, 9470 Buchs (CH); GUIDA, Giuseppe, 9470 Buchs (CH); HAEFLIGER, Kathrin, 9470 Buchs (CH); SCHAEFFER, Marc, 8852 Altendorf (CH)
(74) Vertreter: Hilti Aktiengesellschaft Corporate Intellectual Property
(86) Internationale Anmeldenummer: PCT/EP2016/075005
(87) Internationale Veröffentlichungsnummer: WO 2017/067945

(56) Entgegenhaltungen:
- EP-A1- 2 886 881
- DE-A1- 10 216 897
- US-A- 3 326 004

## Beschreibung

Die Erfindung betrifft ein Verfahren zum Festlegen eines Spreizankers an einem Substrat gemäss Anspruch 1.

Ein Spreizanker ist beispielsweise aus der EP 2886881 A1 bekannt. Er wird dazu verwendet, um Anbauteile an einem Loch in einem festen Substrat, beispielsweise einem Betonsubstrat, zu verankern. Der bekannte Spreizanker weist einen länglichen Bolzen auf, der im Bereich seines vorderen Endes mit einem Spreizkonus versehen ist, und der im Bereich seines hinteren Endes ein Gewinde aufweist, auf dem eine Mutter sitzt. Der Spreizkonus weitet sich zum vorderen Ende hin, das heisst entgegen der Auszugsrichtung, auf. In Auszugsrichtung versetzt zum Spreizkonus ist am Bolzen eine Spreizhülse angeordnet. Diese Spreizhülse ist zum vorderen Ende des Bolzens hin auf den Spreizkonus verschiebbar am Bolzen gelagert. Der Bolzen weist einen einstückig mit dem Bolzen ausgebildeten Bund auf, der einen Axialanschlag bildet, welcher die Verschiebung der Spreizhülse relativ zum Bolzen zum rückwärtigen Ende des Bolzens hin begrenzt.

Beim Setzen des Ankers wird der Bolzen mit dem vorderen Ende voran entgegen der Auszugsrichtung in das Loch im Substrat eingeschlagen. Die Spreizhülse wird dabei vom Bund mitgenommen und gelangt daher ebenfalls in das Loch. Anschliessend wird die Mutter so lange angeschraubt, bis sie am Substrat oder einem gegebenenfalls vorhandenen Anbauteil als Widerlager anliegt, und sodann weiter angezogen, bis ein vorgegebenes Drehmoment erreicht ist. Durch dieses Anziehen der Mutter wird der Bolzen wieder ein Stück weit in Auszugsrichtung aus dem Loch herausgezogen. Nach dem Einschlagen des Spreizankers verhakt sich die Spreizhülse an der Innenwand des Lochs und wird daher beim Herausziehen des Bolzens im Loch zurückgehalten. Infolgedessen wird der Spreizkonus des Bolzens in die Spreizhülse eingezogen, wobei die Spreizhülse aufgrund des zunehmenden Durchmessers des Spreizkonus aufgespreizt wird. Dabei verklemmt sich der Spreizanker mit der Spreizhülse im Substrat, so dass Zuglasten in das Substrat übertragen werden können. Dieses Grundprinzip kann vorzugsweise auch beim erfindungsgemässen Verfahren zum Einsatz kommen.

Die DE 10204591 A1 lehrt ein Verfahren zum Setzen eines Spreizankers, bei dem nach der Verankerung des Spreizankers im Loch zusätzlich Mörtel in das Loch gefüllt wird. Der ausgehärtete Mörtel soll den Spreizanker in radialer Richtung im Loch abstützen. Dabei sieht die DE 10204591 A1 eine Dichtung vor, die vermeidet, dass Mörtel in einen vorderen Bereich des Spreizankers und des Lochs gelangt, wobei die Dichtung auch ein umlaufender Wulst am Ankerbolzen sein kann. Dass eine geringe Mörtelmenge an der Dichtung vorbei in den vorderen Bereich des Lochs übertritt, kann nach der DE 10204591 A1 unter Umständen toleriert werden. Um ein Nachspreizen des Spreizankers bei einer Erweiterung des Lochs beispielsweise in Folge einer Rissbildung im Substrat zu ermöglichen, kann gemäss DE 10204591 A1 ein Mörtel gewählt werden, der nicht fest mit dem Spreizanker und/oder dem Loch verklebt.

Die DE 10360156 A1 offenbart einen Spreizanker, bei dem in der Mantelfläche des Bolzens Vertiefungen ausgebildet sind, die das Eindringen einer in das Loch einbringbaren Mörtelmasse ermöglichen. Diese Vertiefungen können konusförmig ausgebildet werden.

Weitere Anker, bei denen Spreizelemente in Kombination mit erhärtbaren Massen eingesetzt werden, sind aus den Schriften DE102006000475 A1, DE10216897 A1, DE10060510 A1, WO9857035 A1, US5919006A, US5636945A, US5042961 A, US5064312 A, US4601614 A, US4516883A, US4556344 A, US3702060A, US3695045A, US3204416A, US3326004A, US2952129 A, US3379019 A und US2667037 A bekannt.

Die DE102011055878 A1 beschreibt ein Verfahren zur Verankerung eines nachspreizenden Ankers, bei dem die Spreizhülse in ein Ankerloch geklebt wird, wohingegen der Ankerbolzen nicht mit dem Ankerloch verklebt wird.

Aus der WO 11116918 A2 geht eine Injektions-Unterlegscheibe, die ein Mittelloch, eine Befüllöffnung und eine Entlüftungsöffnung aufweist, hervor. Diese Injektions-Unterlegscheibe kommt bei einem Verfahren zur nachträglichen Ertüchtigung eines in ein Loch eingesetzten Befestigungsmittels, das sich bereits in seinem montierten Zustand befindet, beispielsweise eines Schwerlastankers mit einer aufspreizbaren Hülse, zum Einsatz. Eine weitere Unterlegscheibe mit einer Durchgangsbohrung zum Einfüllen der Mörtelmasse in das Loch ist aus der DE10111470 A1 bekannt.

Die DE 19818739 A1 beschreibt einen nachträglichen Bewehrungsanschluss, wobei ein Bewehrungsstab im unteren Bereich mit zumindest einer Konushülse und im oberen Bereich mit einer Kunststoffhülse versehen ist und der Ringspalt mit aushärtbarer Masse gefüllt ist.

EP 0251887 B1 beschreibt einen einzugiessenden Anker, bei dem der Bolzen zwischen seinem Gewindeabschnitt und seinem vorderen Ende von einer Röhre aus deformierbarem Material umgeben ist, welche eine geringere mechanische Festigkeit als diejenige des einmal gehärteten Vergussharzes aufweist.

Die DE 2745438 A1 beschreibt einen Anker, der ein sich erweiterndes Spreizteil aufweist, welches eine Spreizkraft auf umgebende ausgehärtete Bindemittelsegmente ausübt. Die DE 19712425 A1 befasst sich mit einem Verbundanker, der aus einer Ankerstange besteht, die wenigstens einen sich in Richtung auf das Einsteckende erweiterten Konusabschnitt aufweist und mittels einer Verbundmasse in einem Loch eines Substrats verankerbar ist.

Aufgabe der Erfindung ist es, ein Verfahren zum Festlegen eines Spreizankers anzugeben, das bei besonders geringem Aufwand und einfacher Durchführbarkeit ein besonders grosses Anwendungsspektrum für den Spreizanker eröffnet und insbesondere besonders gute Lastwerte ermöglicht.

Die Aufgabe wird erfindungsgemäss durch ein Verfahren mit den Merkmalen des Anspruchs 1 gelöst. Bevorzugte Ausführungsformen sind in den abhängigen Ansprüchen angegeben.

Bei einem erfindungsgemässe Verfahren zum Festlegen eines Spreizankers an einem Substrat ist vorgesehen, dass
- ein Spreizanker, welcher zumindest eine Spreizhülse und zumindest einen Bolzen aufweist, welcher die Spreizhülse durchläuft, bereitgestellt wird, wobei der Bolzen eine Lastangriffszone zum Einleiten einer Zugkraft in den Bolzen, der Lastangriffszone axial benachbart eine Mittelzone und der Mittelzone axial benachbart eine Verankerungszone aufweist, wobei die Spreizhülse auf Höhe der Verankerungszone angeordnet ist, wobei der Bolzen in der Verankerungszone einen Spreizkonus aufweist, welcher die Spreizhülse zum Verankern des Spreizankers radial nach aussen drängt, wenn der Spreizkonus in einer Auszugsrichtung relativ zur Spreizhülse versetzt wird, und wobei der Bolzen zwischen der Mittelzone und der Verankerungszone einen einstückig mit dem Bolzen ausgeführten ringförmigen Bund aufweist, an welchem der Bolzen querschnittsgrösser als in der benachbarten Mittelzone ausgebildet ist, und welcher einen Axialanschlag für die Spreizhülse bildet,
- die Verankerungszone sowie zumindest ein Teil der Mittelzone des Bolzens mitsamt der Spreizhülse entgegen der Auszugsrichtung in ein Loch im Substrat eingeführt werden,
- der Bolzen mit dem Spreizkonus anschliessend relativ zur Spreizhülse in Auszugsrichtung versetzt wird, wodurch der Spreizanker an der Wand des Lochs verankert wird,
- anschliessend der Raum zwischen der Wand des Lochs und dem Bolzen auf Höhe zumindest eines Teils der Mittelzone so mit einer aushärtbaren Masse verfüllt wird, dass die aushärtbare Masse an der Mittelzone bis zum ringförmigen Bund des Bolzens reicht, und
- die im Raum zwischen der Wand des Lochs und dem Bolzen befindliche aushärtbare Masse ausgehärtet wird.

Ein Grundgedanke der Erfindung kann darin gesehen werden, an einem Spreizanker des Bolzentyps axial kurz vor der Verankerungszone einen einstückig mit dem Bolzen ausgeführten, gegenüber der rückwärtigen Mittelzone radial überstehenden Bund vorzusehen, und den Ringraum um den Bolzen des Spreizankers im Anschluss an das mechanische Verankern des Spreizanker so mit aushärtbarer Masse zu verfüllen, dass der Bund nach dem Aushärten der aushärtbaren Masse an seiner rückwärtigen Seite zumindest abschnittsweise, vorzugsweise vollständig, an der ausgehärteten Masse anliegt. In Experimenten hat sich in überraschender Weise gezeigt, dass durch ein solches Vorgehen nicht nur die dynamische Querbelastbarkeit des Spreizankers verbessert werden kann, sondern überraschend auch die axiale Auszugslast.

Insbesondere konnte eine Verbesserung der Auszugslasten bei solchen Spreizankern beobachtet werden, die in einem Loch verankert sind, welches durch einen sich abwechselnd öffnenden und schliessenden Riss verläuft. Hier konnten nach wiederholten Rissöffnungszyklen deutlich erhöhte Restauszugskräfte beobachtet werden. Diese deutlich erhöhten Restauszugskräfte gingen mit deutlich verminderten Ankerverschiebungen und deutlich tieferen Betonausbruchskegeln nach wiederholten Rissöffnungszyklen einher. Es wird derzeit vermutet, dass die verbesserten Werte auf eine Art zusätzliche, formschlüssige axiale Verankerung zurückzuführen sind, die sich zwischen dem Bund und der am Bund anliegenden und mit der Lochwand verbundenen Masse ergibt. Da der Bund hierbei erfindungsgemäss unmittelbar benachbart zur Verankerungszone angeordnet ist - er bildet zugleich auch den axialen Hülsenanschlag - kann die Lasteinleitung mit diesem Mechanismus besonders tief im Loch und somit wirksam erfolgen. Da der Bund erfindungsgemäss einstückig mit dem Bolzen ausgebildet ist, können über den Mechanismus besonders hohe Zuglasten besonders zuverlässig auf den Bolzen übertragen werden.

Die Verfüllung des Raums zwischen der Wand des Lochs und dem Bolzen kann in der erfindungsgemässen Konfiguration also einerseits den Vorteil bringen, dass das komplette Ankersystem deutlich steifer wird, wodurch höhere Lasten im Querzug erreicht werden können. Zusätzlich können durch die besondere erfindungsgemässe Verfahrensführung, bei der am Bund eine zusätzliche formschlüssige Verankerung ähnlich eines Hinterschnitts gebildet wird, auch deutlich höhere Auszugswerte und geringere Verschiebungswerte des Ankers unter seismischen und dynamischen Bedingungen erzielt werden. Dadurch, dass der Anker erfindungsgemäss zuerst verspreizt wird und erst dann verfüllt wird, wird sich der Anker in der Regel nicht wie ein klassischer Verbundanker verhalten, sondern eher wie ein mechanisch verankerter Anker, mit den zusätzlichen Vorteilen einer erhöhten Systemsteifigkeit und einer zusätzlichen Hinterschnitt-ähnlichen Verankerung.

Die Mittelzone des Bolzens befindet sich axial zwischen der Lastangriffszone des Bolzens und der Verankerungszone des Bolzens. Insbesondere sind die Mittelzone, die Lastangriffszone und die Verankerungszone axial zueinander versetzt. Soweit in diesem Beschreibungstext von "radial", "axial" und "Umfangsrichtung" die Rede ist, kann sich dies insbesondere auf die Längsachse des Bolzens beziehen, die insbesondere die Symmetrie- und/oder Mittelachse des Bolzens sein kann. Ein Längsschnitt und/oder ein Querschnitt kann sich ebenfalls auf diese Längsachse beziehen. Soweit hier die Rede davon ist, dass sich ein Element "auf der Höhe" eines anderen befindet, so kann sich dies insbesondere ebenfalls auf diese Längsachse beziehen, das heisst die Höhe wird an der Längsachse gemessen.

Beim erfindungsgemässen Schritt des Einführens der Verankerungszone sowie zumindest eines Teil der Mittelzone des Bolzens mitsamt der Spreizhülse entgegen der Auszugsrichtung in ein Loch im Substrat kann auch die gesamte Mittelzone und/oder zumindest ein Teil der Lastangriffszone in das Loch eingeführt werden. Die Spreizhülse ist erfindungsgemäss längs des Bolzens verschiebbar am Bolzen angeordnet, insbesondere am Bolzen befestigt.

Der Spreizanker kann insbesondere ein kraftkontrolliert spreizender Spreizanker sein. Die Spreizhülse und/oder der Bolzen bestehen geeigneterweise aus einem Metallmaterial, welches, beispielsweise zur gezielten Beeinflussung der Reibung, auch beschichtet sein kann. Bei dem Substrat kann es sich insbesondere um einen mineralischen Baustoff, vorzugsweise um Beton handeln. Die erhärtbare Masse kann beispielsweise ein Mörtel oder ein Kunstharz sein. Je nach Zusammensetzung der Masse kann das Aushärten der Masse beispielsweise einfach durch Zeitablauf geschehen. Alternativ kann beispielsweise ein Aushärten durch Energiezufuhr, insbesondere Wärmezufuhr, vorgesehen sein.

Vorzugsweise wird beim Verankern des Spreizankers der Spreizkonus durch eine gemeinsame axiale Bewegung des Bolzens mitsamt seinem Spreizkonus relativ zur Spreizhülse in die Spreizhülse eingezogen. Der Spreizkonus ist geeigneterweise, zumindest in Axialrichtung, fest am Bolzen angeordnet. Vorzugsweise ist der Spreizkonus einstückig mit dem Bolzen ausgebildet. Der erfindungsgemässe Spreizanker kann vorzugsweise auch als Anker des Bolzentyps bezeichnet werden.

Zweckmässigerweise wird die Spreizhülse von einer schrägen Oberfläche des Spreizkonus radial nach aussen gedrängt und dabei gegen die Lochwand im Substrat gepresst, wenn der Spreizkonus relativ zur Spreizhülse in Auszugsrichtung des Bolzens axial versetzt wird. Hierdurch wird der Spreizanker im Loch verankert. Vorzugsweise verläuft die Auszugsrichtung parallel zur Längsachse des Bolzens und/oder zeigt aus dem Loch im Substrat heraus. Zweckmässigerweise nimmt der Abstand der Oberfläche des Spreizkonus von der Längsachse des Bolzens entgegen der Auszugsrichtung, das heisst mit zunehmendem Abstand von der Lastangriffszone, zu. Die Oberfläche des Spreizkonus kann streng konisch sein. Entsprechend der fachüblichen Definition eines Spreizkonus muss sie dies aber nicht. Beispielsweise kann die Oberfläche des Spreizkonus im Längsschnitt auch konvex oder konkav sein.

Die aushärtbare Masse wird erfindungsgemäss zeitlich erst nach dem mechanischen Verankern, das heisst zeitlich nach dem Einziehen des Spreizkonus in die Spreizhülse und radialem Aufweiten der Spreizhülse, in den Raum zwischen Bolzen und Wand eingebracht, um eine unerwünschte Wechselwirkung der aushärtbaren Masse mit dem mechanischen Verankerungsmechanismus zu vermeiden. Im Anschluss an das Aushärten der aushärtbaren Masse kann aber ein Nachspreizen der Hülse durch den Spreizkonus und somit ein Nachverankern vorgesehen sein.

Der Bund bildet einen rückwärtigen Axialanschlag für die Spreizhülse, der eine Verschiebung der Spreizhülse vom Spreizkonus hinweg, das heisst eine Verschiebung der Spreizhülse in Auszugsrichtung, begrenzt. Die Bund weist vorzugsweise eine ringförmige oder zumindest unterbrochen ringförmige Anschlagfläche für die Spreizhülse auf, wobei die Anschlagfläche bevorzugt senkrecht zur Längsachse des Bolzens verlaufen kann. Der Bund bildet vorzugsweise ein zumindest lokales Querschnittsmaximum am Bolzen, wobei der Axialanschlag, an welcher die Spreizhülse anschlägt, an der Vorderseite des Bundes ausgebildet ist. Der Bund kann grundsätzlich auch radiale Ausnehmungen aufweisen. Vorzugsweise weist er aber die Form eines geschlossenen Ringes auf.

Besonders bevorzugt ist es, dass beim Verfüllen des Raums zwischen der Wand des Lochs und dem Bolzen ein Haltering aus aushärtbarer Masse gebildet wird, welcher auf der der Mittelzone zugewandten Seite des Bundes am Bund anliegt, und welcher den Bolzen umgibt, und dass der Haltering ausgehärtet wird. Gemäss dieser Ausführungsform liegt der gesamte Bund an der ausgehärteten Masse an, so dass die Haltewerte und die Zuverlässigkeit noch weiter gesteigert werden können.

Weiterhin kann vorgesehen sein, dass zumindest ein Teil der Verankerungszone frei von aushärtbarer Masse belassen wird. Der Raum zwischen der Wand des Lochs und dem Bolzen wird demgemäss lediglich teilweise mit aushärtbarer Masse verfüllt. Hierdurch können unerwünschte Wechselwirkungen zwischen der aushärtbaren Masse und dem Spreizmechanismus vermieden werden, und die Zuverlässigkeit noch weiter gesteigert werden. Beispielsweise kann der am Bolzen integrierte Bund eine Dichtung bilden, welcher einen Strom der aushärtbaren Masse zur Verankerungszone hin hemmt.

Ferner ist es zweckmässig, dass eine aushärtbare Masse verwendet wird, welche nach dem Aushärten stärker an der Wand des Lochs als am Bolzen haftet. Insbesondere kann eine aushärtbare Masse verwendet werden, welche nach dem Aushärten an der Wand des Lochs, nicht hingegen am Bolzen haftet. Gemäss dieser Ausgestaltung kann die ausgehärtete aushärtbare Masse einerseits als formschlüssiger Anker für den Bund am Substrat dienen, andererseits kann sich der verbleibende Bolzen in der ausgehärteten Masse axial bewegen, so dass der mechanische Spreizmechanismus weiterhin operativ bleibt. Hierdurch kann die Zuverlässigkeit noch weiter gesteigert werden. Insbesondere kann die ausgehärtete Masse eine feste Verbindung zur Wand des Lochs haben, sich jedoch bei Rissöffnung vom Bolzen lösen.

Der Bolzen kann in der Mittelzone gewindefrei, insbesondere im wesentlichen zylindrisch, ausgeführt sein. Hierdurch kann der oben beschriebene formschlüssige Ankereffekt noch besser auf den Bund konzentriert werden, was im Hinblick auf die Lastwerte vorteilhaft sein kann. Aus demselben Grund kann zusätzlich oder alternativ der Bolzen am ringförmigen Bund querschnittsgrösser als in der Lastangriffszone ausgebildet sein.

In der Lastangriffszone kann der Bolzen ein Aussengewinde aufweisen. Alternativ oder zusätzlich kann der Bolzen kann in der Lastangriffszone aber auch ein Innengewinde oder/und einen Kopf aufweisen.

Eine weitere bevorzugte Ausgestaltung der Erfindung liegt darin, dass eine Injektions-Unterlegscheibe vorgesehen wird, welche den Bolzen ringförmig umgibt, und welche zumindest einen Kanal aufweist, und dass der Raum zwischen der Wand des Lochs und dem Bolzen durch den Kanal der Injektions-Unterlegscheibe mit der aushärtbaren Masse verfüllt wird. Hierdurch ist ein besonders einfaches und zugleich zuverlässiges Verfüllen möglich. Die Injektions-Unterlegscheibe kann beispielsweise wie in der DE 10111470 A1 beschrieben ausgeführt sein. Der Raum zwischen der Wand des Lochs und dem Bolzen wird zweckmässigerweise von der Rückseite des Bolzens, das heisst von seiner Verankerungszone und/oder Gewindeseite her verfüllt, vorzugsweise mittels einer Injektions-Unterlegscheibe.

Die Erfindung betrifft auch eine Befestigungsanordnung bestehend aus einem Spreizanker und einem Substrat, wobei der Spreizanker mittels eines erfindungsgemässen Verfahrens am Substrat festgelegt ist. Merkmale, die im Zusammenhang mit dem erfindungsgemässen Verfahren erläutert werden, können auch bei der erfindungsgemässen Befestigungsanordnung zum Einsatz kommen, so wie auch umgekehrt Merkmale, die im Zusammenhang mit der erfindungsgemässen Befestigungsanordnung erläutert werden, auch beim erfindungsgemässen Verfahren zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

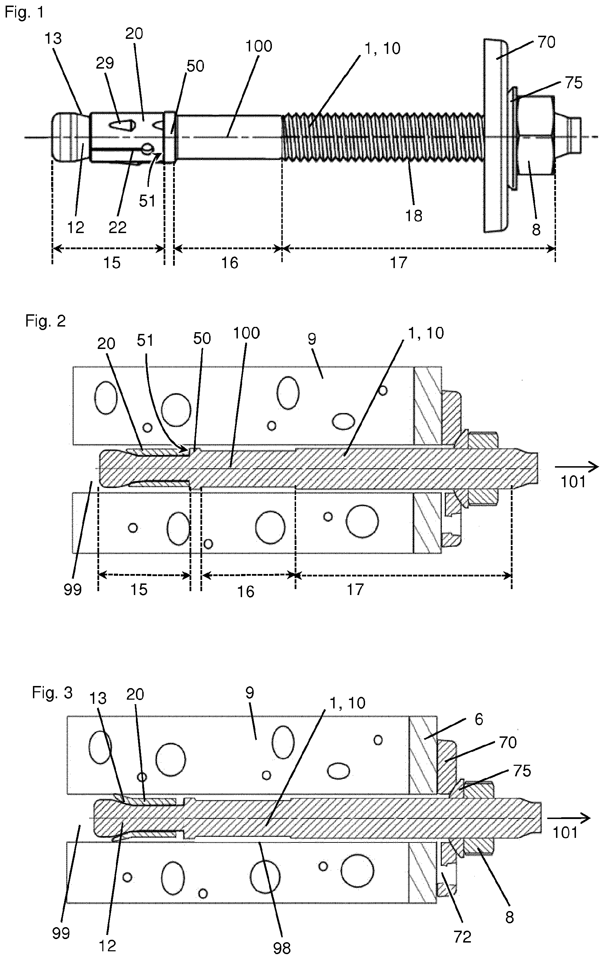

- Figuren 1 bis 4:: aufeinanderfolgende Verfahrensstadien bei der Durchführung eines erfindungsgemässen Verfahrens, wobei die Figur 1 den verwendeten Anker in Seitenansicht und die Figuren 2 bis 4 den verwendeten Anker in Längsschnittsansicht zeigen, und wobei in den Figuren 2 bis 4 das Aussengewinde lediglich grob schematisch gezeigt ist.

Die Figuren 1 bis 4 zeigen aufeinanderfolgende Stadien bei der Durchführung eines Ausführungsbeispiels eines erfindungsgemässen Setzverfahrens.

Zunächst wird, wie in Figur 1 gezeigt, ein Spreizanker 1 bereitgestellt. Dieser Spreizanker 1 weist einen Bolzen 10 und eine Spreizhülse 20 auf, wobei die Spreizhülse 20 den Bolzen 10 ringförmig umgibt.

Der Bolzen 10 weist drei in axialer Richtung beabstandete Zonen auf: im vorderen Endbereich des Bolzens 10 eine Verankerungszone 15, im rückwärtigen Endbereich des Bolzen 10 eine Lastangriffszone 17 und axial zwischen der Verankerungszone 15 und der Lastangriffszone 17 eine Mittelzone 16. Die Verankerungszone 15, die Mittelzone 16 und die Lastangriffszone 17 sind koaxial zueinander angeordnet. In der Verankerungszone 15 weist der Bolzen 10 einen Spreizkonus 12 für die Spreizhülse 20 auf. Der Spreizkonus 12 ist fest am Bolzen 10 angeordnet und vorzugsweise einstückig mit dem Bolzen 10 ausgebildet. Am Spreizkonus 12 ist die Oberfläche des Bolzens 10 als Schrägfläche 13 ausgebildet, und der Durchmesser des Bolzens 10 nimmt dort zum vorderen Ende des Bolzens 10 zu, das heisst der Bolzen 10 weitet sich am Spreizkonus 12 zu seinem vorderen Ende hin auf. Die Schrägfläche 13 am Spreizkonus 12 kann konisch im streng mathematischen Sinne sein, muss dies aber nicht.

Die Spreizhülse 20 kann axial verlaufende Schlitze 22 aufweisen, welche das Auspreizen der Spreizhülse 20 erleichtern. Die Spreizhülse 20 kann ferner, zur besseren Verankerung an der Wand 98 eines Lochs 99, aussenzeitige Vorsprünge 29 aufweisen.

Die Lastangriffszone 17 dient zum Einleiten von in Auszugsrichtung 101 gerichteten Zugkräften in den Bolzen 10. Im dargestellten Ausführungsbeispiel zeichnet sich die Lastangriffszone 17 dadurch aus, dass der Bolzen dort ein Aussengewinde 18 aufweist. Auf diesem Aussengewinde 18 des Bolzens 10 sitzt eine Mutter 8, welche ein mit dem Aussengewinde 18 korrespondierendes Innengewinde aufweist.

In der Mittelzone 16 des Bolzens 10 ist der Bolzen 10 im wesentlichen zylindrisch ausgeführt. Zwischen der Mittelzone 16 und der Verankerungszone 15 weist der Bolzen 10 einen ringförmigen Bund 50 auf. Dieser Bund 50 ist einstückig mit dem Bolzen 10 ausgebildet, koaxial zur Mittelzone 16 und der Verankerungszone 15 angeordnet und sowohl querschnittsgrösser als die Mittelzone 16 als auch querschnittsgrösser als die Verankerungszone 15, zumindest querschnittsgrösser als der an den Bund 50 anschliessende rückwärtige Bereich der Verankerungszone 15. Der Bund 50 bildet somit ein zumindest lokales Querschnittsmaximum und einen Axialanschlag 51, welcher eine axiale Bewegung der Spreizhülse 20 relativ zum Bolzen 10 in Auszugsrichtung 101 hemmt und begrenzt. Der Bund 50 kann auch querschnittsgrösser als die Lastangriffszone 17 sein.

Der bereitgestellte Anker weist schliesslich eine Injektions-Unterlegscheibe 70 auf, welche den Bolzen 10 ringförmig umgibt. In dieser Injektions-Unterlegscheibe 70 ist ein Kanal 72 ausgebildet, der zum weiter unten näher erläuterten Einbringen einer aushärtbaren Masse 77 dient. Zwischen der Mutter 8 und der Injektions-Unterlegscheibe 70 kann beispielsweise noch eine Kugelscheibe 75 vorgesehen werden, um ein gleichmässiges Anpressen der Injektions-Unterlegscheibe 70 auch bei nicht-orthogonalen Anordnungen zu gewährleisten.

Im nächsten Verfahrensschritt, dessen Resultat in Figur 2 gezeigt ist, wird der Bolzen 10 mit seinem vorderen Ende voran durch ein Anbauteil 6 hindurch parallel zur Längsachse 100 des Bolzens 10 und entgegen der Auszugsrichtung 101 des Bolzens 10 in ein Loch 99 in einem Substrat 9 geschoben. Aufgrund des am Bund 50 ausgebildeten Axialanschlags 51, der eine Verschiebung der Spreizhülse 20 vom Spreizkonus 12 hinweg begrenzt, wird dabei auch die Spreizhülse 20 in das Loch 99 eingebracht.

Im darauffolgenden Verfahrensschritt, dessen Resultat in Figur 3 gezeigt ist, wird der Bolzen 10 durch Anziehen der über die fakultativ vorhandene Kugelscheibe 75, die Injektions-Unterlegscheibe 70 und das Anbauteil 6 mittelbar am Substrat 9 anliegenden Mutter 8 wieder ein Stück weit in der parallel zur Längsachse 100 des Bolzens 10 verlaufenden Auszugsrichtung 101 aus dem Loch 99 herausgezogen. Aufgrund ihrer Reibung an der im Wesentlichen zylindrischen Wand 98 des Lochs 99 bleibt die Spreizhülse 20 dabei im Loch 99 zurück und es kommt infolgedessen zu einer Verschiebung des Bolzens 10 relativ zur Spreizhülse 20. Bei dieser Verschiebung dringt die Schrägfläche 13 des Spreizkonus 12 des Bolzens 10 immer tiefer so in die Spreizhülse 20 ein, dass die Spreizhülse 20 im Bereich ihres vorderen Endes von der Schrägfläche 13 radial aufgeweitet und an die Wand 98 des Lochs 99 angepresst wird. Durch diesen Mechanismus wird der Spreizanker 1 im Substrat 9 fixiert.

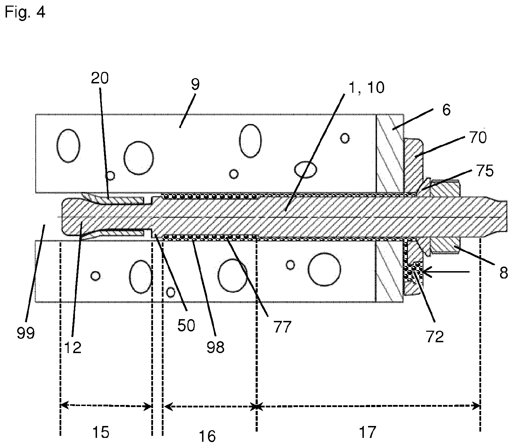

Im darauffolgenden Verfahrensschritt, dessen Resultat in Figur 4 gezeigt ist, wird wie in Figur 4 mit einem Pfeil angedeutet eine aushärtbare Masse 77 durch den Kanal 72 in der Injektions-Unterlegscheibe 70 in den Raum zwischen der Wand 98 des Lochs 99 und dem Bolzen 10 injiziert. Die aushärtbare Masse 77 fliesst dabei in dem einen Ringraum bildenden Raum zwischen der Wand 98 des Lochs 99 und dem Bolzen 10 entlang der Lastangriffszone 17 und der Mittelzone 16, oder je nach Verankerungstiefe auch nur entlang der Mittelzone 16, in Richtung auf die Verankerungszone 15 hin. Erfindungsgemäss wird dabei mengenmässig so viel aushärtbare Masse 77 in den Raum zwischen der Wand 98 des Lochs 99 und dem Bolzen 10 injiziert, dass die aushärtbare Masse 77 bis zum ringförmigen Bund 50 am Bolzen 10 gelangt. Der ringförmige Bund 50 kann als Dichtung dienen, die ein Weiterfliessen der aushärtbare Masse 77 in die Verankerungszone 15 zumindest hemmt. Die bestimmungsgemässe Verfüllung kann daran erkannt werden, dass am Lochmund aushärtbare Masse 77 austritt. Vorzugsweise wird so viel aushärtbare Masse 77 in den Raum zwischen der Wand 98 des Lochs 99 und dem Bolzen 10 eingebracht, dass die aushärtbare Masse 77 einen konzentrisch zur Längsachse 100 des Bolzens 10 angeordneten und durchgehend am Bund 50 anliegenden Haltering bildet.

Im Anschluss an das Einbringen der aushärtbaren Masse 77 in den Raum zwischen der Wand 98 des Lochs 99 und dem Bolzen 10 wird die aushärtbare Masse 77 im Raum zwischen der Wand 98 des Lochs 99 und dem Bolzen 10 ausgehärtet, was bei einer aushärtbare Masse 77 auf Basis eines Zweikomponentenharzes beispielsweise durch Abwarten einer Aushärtezeit geschehen kann.

## Patentansprüche

1. Verfahren zum Festlegen eines Spreizankers (1) an einem Substrat (9) bei dem
- ein Spreizanker (1), welcher zumindest eine Spreizhülse (20) und zumindest einen Bolzen (10) aufweist, welcher die Spreizhülse (20) durchläuft, bereitgestellt wird, wobei der Bolzen (10) eine Lastangriffszone (17) zum Einleiten einer Zugkraft in den Bolzen (10), der Lastangriffszone (17) axial benachbart eine Mittelzone (16) und der Mittelzone (16) axial benachbart eine Verankerungszone (15) aufweist, wobei die Spreizhülse (20) auf Höhe der Verankerungszone (15) angeordnet ist, wobei der Bolzen (10) in der Verankerungszone (15) einen Spreizkonus (12) aufweist, welcher die Spreizhülse (20) zum Verankern des Spreizankers (1) radial nach aussen drängt, wenn der Spreizkonus (12) in einer Auszugsrichtung (101) relativ zur Spreizhülse (20) versetzt wird, und wobei der Bolzen (10) zwischen der Mittelzone (16) und der Verankerungszone (15) einen einstückig mit dem Bolzen (10) ausgeführten ringförmigen Bund (50) aufweist, an welchem der Bolzen (10) querschnittsgrösser als in der benachbarten Mittelzone (16) ausgebildet ist, und welcher einen Axialanschlag (51) für die Spreizhülse (20) bildet,
- die Verankerungszone (15) sowie zumindest ein Teil der Mittelzone (16) des Bolzens (10) mitsamt der Spreizhülse (20) entgegen der Auszugsrichtung (101) in ein Loch (99) im Substrat (9) eingeführt werden,
- der Bolzen (10) mit dem Spreizkonus (12) anschliessend relativ zur Spreizhülse (20) in Auszugsrichtung (101) versetzt wird, wodurch der Spreizanker (1) an der Wand (98) des Lochs (99) verankert wird,
- anschliessend der Raum zwischen der Wand (98) des Lochs (99) und dem Bolzen (10) auf Höhe zumindest eines Teils der Mittelzone (16) so mit einer aushärtbaren Masse (77) verfüllt wird, dass die aushärtbare Masse (77) an der Mittelzone (16) bis zum ringförmigen Bund (50) des Bolzens (10) reicht, und
- die im Raum zwischen der Wand (98) des Lochs (99) und dem Bolzen (10) befindliche aushärtbare Masse (77) ausgehärtet wird.

2. Verfahren nach Anspruch 1,
**dadurch gekennzeichnet,**
**dass** beim Verfüllen des Raums zwischen der Wand (98) des Lochs (99) und dem Bolzen (10) ein Haltering aus aushärtbarer Masse (77) gebildet wird, welcher auf der der Mittelzone (16) zugewandten Seite des Bundes (50) am Bund (50) anliegt, und welcher den Bolzen (10) umgibt, und
**dass** der Haltering ausgehärtet wird.

3. Verfahren nach einem der vorstehenden Ansprüche,
**dadurch gekennzeichnet,**
**dass** zumindest ein Teil der Verankerungszone (15) frei von aushärtbarer Masse (77) belassen wird.

4. Verfahren nach einem der vorstehenden Ansprüche,
**dadurch gekennzeichnet,**
**dass** eine aushärtbare Masse (77) verwendet wird, welche nach dem Aushärten stärker an der Wand (98) des Lochs (99) als am Bolzen (10) haftet.

5. Verfahren nach einem der vorstehenden Ansprüche,
**dadurch gekennzeichnet,**
**dass** der Bolzen (10) in der Mittelzone (16) im wesentlichen zylindrisch ausgeführt ist.

6. Verfahren nach einem der vorstehenden Ansprüche,
**dadurch gekennzeichnet,**
**dass** der Bolzen (10) in der Lastangriffszone (17) ein Aussengewinde (18) aufweist.

7. Verfahren nach einem der vorstehenden Ansprüche,
**dadurch gekennzeichnet,**
**dass** eine Injektions-Unterlegscheibe (70) vorgesehen wird, welche den Bolzen (10) ringförmig umgibt, und welche zumindest einen Kanal (72) aufweist, und
**dass** der Raum zwischen der Wand (98) des Lochs (99) und dem Bolzen (10) durch den Kanal (72) der Injektions-Unterlegscheibe (70) mit der aushärtbaren Masse (77) verfüllt wird.

8. Befestigungsanordnung bestehend aus einem Spreizanker (1) und einem Substrat (9), wobei der Spreizanker (1) mittels eines Verfahrens nach einem der Ansprüche 1 bis 7 am Substrat festgelegt ist.

## Claims

1. Method of fixing an expansion anchor (1) to a substrate (9), in which
- an expansion anchor (1) having at least one expansion sleeve (20) and at least one bolt (10) that passes through the expansion sleeve (20) is provided, wherein the bolt (10) has a load-application zone (17) for introducing a tensile force into the bolt (10), a centre zone (16) axially adjacent to the load-application zone (17) and an anchoring zone (15) axially adjacent to the centre zone (16), wherein the expansion sleeve (20) is arranged at the height of the anchoring zone (15), wherein the bolt (10) is provided in the anchoring zone (15) with an expansion cone (12) that pushes the expansion sleeve (20) radially outwards to anchor the expansion anchor (1) when the expansion cone (12) is displaced relative to the expansion sleeve (20) in a pull-out direction (101) and wherein the bolt (10) is provided between the centre zone (16) and the anchoring zone (15) with an annular collar (50) formed in one piece with the bolt (10), the cross section of the bolt (10) being greater at the annular collar than in the adjacent centre zone (16) and the annular collar forming an axial stop (51) for the expansion sleeve (20),
- the anchoring zone (15) and at least part of the centre zone (16) of the bolt (10) together with the expansion sleeve (20) are inserted into a hole (99) in the substrate (9) in the opposite direction to the pull-out direction (101),
- the bolt (10), together with the expansion cone (12), is then displaced relative to the expansion sleeve (20) in the pull-out direction (101), as a result of which the expansion anchor (1) is anchored to the wall (98) of the hole (99),
- the space between the wall (98) of the hole (99) and the bolt (10) is then filled with a curable composition (77) to the height of at least part of the centre zone (16) such that the curable composition (77) at the centre zone (16) reaches as far as the annular collar (50) of the bolt (10) and
- the curable composition (77) situated in the space between the wall (98) of the hole (99) and the bolt (10) is cured.

2. Method according to claim 1,
**characterised in that**
the filling of the space between the wall (98) of the hole (99) and the bolt (10) results in the formation of a retaining ring made of curable composition (77) that bears against the collar (50) on the side of the collar (50) directed towards the centre zone (16) and surrounds the bolt (10) and
that the retaining ring is cured.

3. Method according to one of the preceding claims,
**characterised in that**
at least part of the anchoring zone (15) is left free of curable composition (77).

4. Method according to one of the preceding claims,
**characterised in that**
the curable composition (77) used adheres more firmly to the wall (98) of the hole (99) than to the bolt (10) after curing.

5. Method according to one of the preceding claims,
**characterised in that**
the bolt (10) is substantially cylindrical in the centre zone (16).

6. Method according to one of the preceding claims,
**characterised in that**
the bolt (10) has an external thread (18) in the load-application zone (17).

7. Method according to one of the preceding claims,
**characterised by**
an injection washer (70) that surrounds the bolt (10) in an annular manner and has at least one channel (72) and
**characterised in that**
the space between the wall (98) of the hole (99) and the bolt (10) is filled with the curable composition (77) through the channel (72) of the injection washer (70).

8. Fastening arrangement consisting of an expansion anchor (1) and a substrate (9), wherein the expansion anchor (1) is fixed to the substrate by means of a method according to one of claims 1 to 7.

## Revendications

1. Procédé destiné à fixer un ancrage expansible (1) à un substrat (9), comportant les étapes consistant à :
- fournir un ancrage expansible (1) comportant au moins une douille d'expansion (20) et au moins un goujon (10) qui traverse la douille d'expansion (20), dans lequel le goujon (10) comporte une zone d'application de charge (17) pour introduire une force de traction dans le goujon (10), la zone d'application de charge (17) étant axialement adjacente à une zone centrale (16) et une zone d'ancrage (15) étant axialement adjacente à la zone centrale (16), dans lequel la douille d'expansion (20) est agencée à hauteur de la zone d'ancrage (15), dans lequel le goujon (10) comporte un cône d'expansion (12) dans la zone d'ancrage (15), lequel cône d'expansion pousse radialement vers l'extérieur pour ancrer l'ancrage expansible (1) lorsque le cône d'expansion (12) est déplacé par rapport à la douille d'expansion (20) dans une direction d'extraction (101), et dans lequel le goujon (10) comporte, entre la zone centrale (16) et la zone d'ancrage (15), une collerette annulaire (50) réalisée d'un seul bloc avec le goujon (10), sur lequel le goujon (10) est formé avec une section transversale plus grande dans la zone centrale voisine (16), et qui forme une butée axiale (51) pour la douille d'expansion (20),
- insérer la zone d'ancrage (15) ainsi qu'au moins une partie de la zone centrale (16) du goujon (10) avec la douille d'expansion (20) à l'opposé de la direction d'extraction (101) dans un trou (99) dans le substrat (9),
- ancrer ensuite le goujon (10) avec le cône d'expansion (12) par rapport à la douille d'expansion (20) dans la direction d'extraction (101), l'ancrage expansible (1) étant ainsi ancré à la paroi (98) du trou (99),
- remplir ensuite l'espace entre la paroi (98) du trou (99) et le goujon (10) à hauteur d'au moins une partie de la zone centrale (16) avec une masse durcissable (77), de telle sorte que la masse durcissable (77) de la zone centrale (16) atteint la collerette annulaire (50) du goujon (10), et
- durcir la masse durcissable (77) situé dans l'espace entre la paroi (98) du trou (99) et le goujon (10) .

2. Procédé selon la revendication 1,
**caractérisé en ce que**
lors du remplissage de l'espace entre la paroi (98) du trou (99) et le goujon (10) est formée une bague de retenue en masse durcissable (77) qui vient en butée contre le côté de la collerette (50) dirigé vers la zone centrale (16) et qui entoure le goujon (10), et
la bague de retenue est durcie.

3. Procédé selon l'une des revendications précédentes,
**caractérisé en ce que**
au moins une partie de la zone d'ancrage (15) est laissée exempte de toute matière durcissable (77).

4. Procédé selon l'une des revendications précédentes,
**caractérisé en ce que**
une masse durcissable (77) est utilisée qui, après le durcissement, adhère plus fortement à la paroi (98) du trou (99) qu'au goujon (10).

5. Procédé selon l'une des revendications précédentes,
**caractérisé en ce que**
le goujon (10) est réalisé de manière sensiblement cylindrique dans la zone centrale (16).

6. Procédé selon l'une des revendications précédentes,
**caractérisé en ce que**
le goujon (10) comporte un filetage extérieur (18) dans la zone d'application de charge (17).

7. Procédé selon l'une des revendications précédentes,
**caractérisé en ce que**
une rondelle plate d'injection (70) est prévue, laquelle rondelle entoure le goujon (10) de manière annulaire et qui comporte au moins un canal (72), et
l'espace situé entre la paroi (98) du trou (99) et le goujon (10) est rempli avec la masse durcissable (77) à travers le canal (72) de la rondelle plate d'injection (70).

8. Ensemble de fixation constitué d'un ancrage expansible (1) et d'un substrat (9), dans lequel l'ancrage expansible (1) est fixé au substrat au moyen d'un procédé selon l'une des revendications 1 à 7.
